(19) Europäisches Patentamt
European Patent Office
Office européen des brevets

(11) EP 0 157 969 B2

(12) **NEW EUROPEAN PATENT SPECIFICATION**

(45) Date of publication and mention of the opposition decision:
**12.01.2000 Bulletin 2000/02**

(45) Mention of the grant of the patent:
**19.08.1992 Bulletin 1992/34**

(21) Application number: **84302342.5**

(22) Date of filing: **05.04.1984**

(51) Int Cl.[7]: **C10M 139/00**, C07F 5/04

# (54) Organo-borate compositions and their use in lubricants

Organo-Borat Zusammensetzungen und deren Anwendung in Schmiermitteln

Compositions organo-borate et leurs utilisations dans des lubrifiants

(84) Designated Contracting States:
**DE FR GB**

(43) Date of publication of application:
**16.10.1985 Bulletin 1985/42**

(73) Proprietor: **The Lubrizol Corporation**
**Wickliffe, Ohio 44092 (US)**

(72) Inventor: **Walsh, Reed Huber**
**C/o The Lubrizol Corporation**
**Wickliffe Ohio 44092 (US)**

(74) Representative: **Crisp, David Norman et al**
**D. YOUNG & CO.**
**21 New Fetter Lane**
**London EC4A 1DA (GB)**

(56) References cited:
**US-A- 3 505 226**
**US-A- 4 298 486**
**US-A- 4 382 006**

Remarks:
The file contains technical information submitted after the application was filed and not included in this specification

EP 0 157 969 B2

## Description

The present invention relates to boron containing compositions and to lubricating compositions containing the same. Particularly, the invention relates to organo-borate compounds and to lubricating compositions containing such compounds.

As is well known, many present day lubricating problems involve providing adequate lubrication between moving metal surfaces which are brought into forceful working relationship. Thus, there is a need for lubricants of sufficient lubricity to provide lubrication between the bearing surfaces of moving metal components where the bearing surfaces are subjected to large forces at the point of contact. These forces and the accompanying friction result in the generation of heat which elevates the metal temperatures. If the pressure is sufficiently high and the relative motion between surfaces sufficient, very high metal temperatures can result. Thus, in extreme cases, the contacting metal surfaces may actually weld one to the other. With less extremes of pressure, inadequate lubrication between surfaces is manifested in accelerated wear, scuffing, etc.

In addition to anti-wear and extreme pressure properties, lubricants for use in limited slip differentials require unusual frictional properties. Limited slip differentials are unlike conventional differentials in that they have the ability to move a vehicle when only one wheel has traction. This advantage is accomplished through an internal clutch that restricts conventional differential action and tends to make the left and right rear axle shafts turn as one. There are a variety of clutch arrangements employed to accomplish this result but most rely on the force of friction to restrict the free turning of the axle shaft. Since the clutches are continuously contacted by the differential lubricant, the restricting force depends on the coefficient of friction imparted to the engaging parts by said lubricant. The coefficient of friction must be compromised. On the one hand, it must be high enough to allow the clutch plates to seize, thus allowing the vehicle to move in instances when one rear wheel has low traction and, on the other hand, it must be sufficiently low to allow the clutch plates to slip and accommodate conventional differential action such as occurs when the vehicle turns corners. The ability of a lubricant to impart a coefficient of friction within this fairly wide effective range is referred to as effectiveness.

Another important aspect of frictional properties relates to the chatter or noise caused by the differential action of clutches. Chatter is generated by a stick-slip action of the engaging parts of the clutches. Differential manufacturers have found that stick-slip is primarily the result of the static coefficient of friction being greater than the dynamic coefficient of friction, that is, when the ratio of the static coefficient of friction to the dynamic coefficient of friction is greater than one.

Still another important aspect of the frictional properties of lubricating compositions relates to the use of such compositions in contact with wet type disc brakes such as those employed in the differentials of heavy-duty machinery and particularly high powered output tractors. In such applications, these lubricating compositions, in addition to not promoting brake chatter, must also not interfere or prevent proper braking action.

Many diverse additives for enhancing anti-wear, extreme pressure, friction modifying and axle efficiency performance properties are well known in the prior art. Examples of such additives are chlorinated waxes, alkyl polysulfides, alkyl phosphites, alkaryl phosphates, metal dithiophosphates, sulfurized sperm oil, sulfurized olefins, alkali metal borates, and the like. However, a need still exists for a single material which can provide all of these properties.

In one aspect, the invention provides a boron containing composition comprising an organo-borate compound of the general formulae

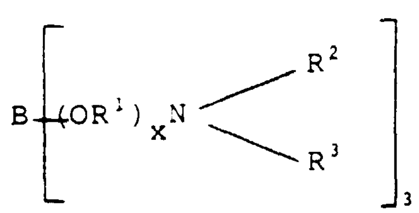

(I)

wherein B is boron; $R^1$ is a lower alkylene-based radical; $R^2$ is a hydrocarbon-based radical, as defined hereinbelow, or alkoxy radical, the latter having the structure $-(R^4O)_yH$ wherein $R^4$ is a lower alkylene-based radical; $R^3$ is a hydrocarbon-based radical; and x and y are each an integer which is at least 1, preferably up to about 50, and the sum of x + y is at most about 75.

The lubricating compositions of this invention, comprising a major proportion of an oil of lubricating viscosity and a minor proportion of the organo-borate compound defined above and described in more detail hereinbelow, exhibit anti-wear, extreme pressure, friction modifying and axle efficiency performance characteristics.

The multi-functional additive compositions of this invention may be prepared by the reaction of a boron compound selected from boric acid, boron trioxide and boric acid esters of the formula $B(OR)_3$ wherein R is a hydrocarbon-based radical containing from 1 to about 8 carbon atoms and preferably from about 1 to about 4 carbon atoms, with a tertiary amine corresponding to the formula

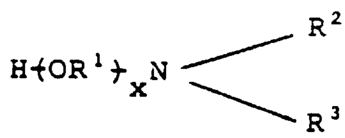

(III)

wherein $R^1$ is a lower alkylene based radical, preferably containing from 1 to about 8 carbon atoms; $R^2$ is a hydrocarbon-based radical, preferably containing from 1 to about 100 carbon atoms, or a radical of the structure $-(R^4O)_yH$ where $R^4$ is a lower alkylene based radical, preferably containing from 1 to about 8 carbon atoms; $R^3$ is a hydrocarbon based radical, preferably containing from 1 to about 100 carbon atoms; x and y are each an integer which is at least 1, preferably up to about 50, and the sum of x + y is at most 75. In a preferrred embodiment, the amines useful in preparing the organo-borate additive compositions of this invention are those tertiary amines corresponding to formula (III) above wherein $R^2$ is a radical of the structure-$(R^4O)_yH$ wherein $R^4$ is a lower alkylene radical containing from 1 to about 8 carbon atoms and $R^3$ is an aliphatic based hydrocarbon radical containing from about 8 to about 25 carbon atoms, most preferably from about 10 to about 20 carbon atoms, and x and y are each an integer ranging from at least 1 to about 25 and wherein the sum of x + y is at most 50.

In a most preferred embodiment, the tertiary amines useful in preparing the multi-functional organo-borate additive compositions of this invention are those tertiary amines corresponding to formula (III) above wherein $R^2$ is a radical of the structure $-(R^4O)_yH$, wherein $R^1$ and $R^4$ are individually ethylene or propylene radicals, $R^3$ is an alkyl or an alkenyl based hydrocarbon radical containing from about 10 to about 20 carbon atoms, x and y are each an integer ranging from at least 1 to about 9 and preferably from at least 1 to about 5 and the sum of x+y is at most 10 and preferably at most 5, i.e. the sum of x+y ranges from about 2 to about 10 and preferably from about 2 to about 5 respectively.

As will be evident to those reading this application, the above defined tertiary amines provide the

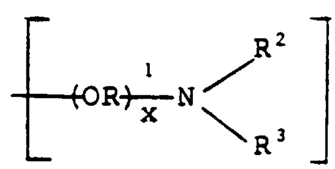

moieties of the organo-borate compounds defined in formula (I).

As used herein, the term "hydrocarbon-based radical" denotes a radical having a carbon atom directly attached to the remainder of the molecule and having predominantly hydrocarbon character within the context of this invention. Such radicals include the following:

(1) Hydrocarbon radicals: that is, aliphatic. (e.g.. alkyl or alkenyl), alicyclic (e.g.. cycloalkyl or cycloalkenyl), aromatic, aliphatic- and alicyclic-substituted aromatic, aromatic-substituted aliphatic and alicyclic radicals, and the like. Such radicals are known to those skilled in the art; representative examples are examples of such radicals as represented by $R^2$ and $R^3$ in the formulae above include methyl, ethyl, butyl, hexyl, octyl, decyl, dodecyl, tetradecyl, octadecyl, eicosyl, cyclohexyl, phenyl and naphthyl and the like including all isomeric forms of such radicals.

(2) Substituted hydrocarbon radicals; that is, radicals containing non-hydrocarbon substituents which, in the context of this invention, do not alter the predominantly hydrocarbon character of the radical. Those skilled in the art will be aware of suitable substituents; representative examples are hydroxy (HO-); alkoxy (RO-); carbalkoxy

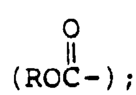

acyl

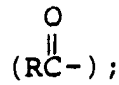

acyloxy

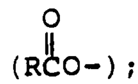

carboxamide

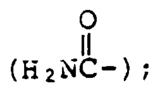

acylimidazyl

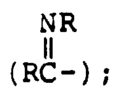

nitro(-$NO_2$); and alkylthio(RS-) and halogen atoms (e.g. F, Cl. Br and I).

Hetero radicals; that is radicals which, while predominantly hydrocarbon in character within the context of this invention, contain atoms other than carbon present in a chain or ring otherwise composed of carbon atoms. Suitable hetero atoms will be apparent to those skilled in the art and include, for example, nitrogen, oxygen and sulfur.

In general, no more than about three substituents or hetero atoms, and preferably no more than one, will be present for each 10 carbon atoms in the hydrocarbon-based radical.

Terms such as "alkyl-based radical," "alkenyl-based radical" and "alkylene-based radical" and the like have analogous meanings with respect to alkyl and aryl radicals and the like.

Representative examples of the tertiary amine compounds useful in preparing the organo-borate compounds of this invention include monoalkoxylated amines such as dimethylethanolamine, diethylethanolamine, dibutylethanolamine, diisopropylethanolamine, di(2-ethylhexyl)ethanolamine, phenylethylethanolamine, dibutylisopropanolamine. dimethylisopropanolamine and the like and polyalkoxylated amines such as methyldiethanolamine, ethyldiethanolamine, phenyldiethanolamine, N-(2-hydroxyethyl)-N-tallow-3-aminomethylpropionate, N-(2-hydroxyethyl)-N-tallow acetamide, 2-oleoylethyl(2-hydroxyethyl) tallowamine, 2-methoxy-ethyl-(2-hydroxyethyl) tallowamine, and the like.

An especially preferred class of tertiary amines useful in preparing the organo-borate compounds of the invention is that constituting the commercial alkoxylated fatty amines known by the trademark "ETHOMEEN" and available from tne Armak Company. Representative examples of these ETHOMEENS is ETHOMEEN C/12 (bis[2-hydroxyethyl] cocoamine); ETHOMEEN C/20(polyoxyethylene[10]cocoamine); ETHOMEEN S/12(bis[2-hydroxyethyl]soyamine); ETHOMEEN T/12(bis[2-hydroxyethyl]tallowamine); ETHOMEEN T/15(polyoxyethylene[5]tallowamine); ETHOMEEN 0/12(bis[2-hydroxyethyl]oleylamine; ETHOMEEN 18/12(bis[2-hydroxyethyl]octadecylamine; ETHOMEEN 18/25(polyoxyethylene[15]-octadecylamine and the like. Of the various ETHOMEEN compounds useful in preparing the organoborate additive compounds of the invention, ETHOMEEN T/12 is most preferred.

If desired, the tertiary amine reactants represented by formula (III) above may be reacted first with elemental

sulfur to sulfurize any carbon-to-carbon double bond unsaturation which may be present in the hydrocarbon based radicals $R^2$ and $R^3$ when these radicals are, for example, alkenyl radicals (e.g. fatty oil or fatty acid radicals). Generally the sulfurization reaction will be carried out at temperatures ranging from about 100°C, to about 250°C. and preferably from about 150°C, to about 200°C. The molar ratio of sulfur to amine can range from about 0.5:1.0 to about 3.0:1.0 and preferably 1.0:1.0. Although, generally no catalyst is required to promote sulfurization of any carbon-to-carbon double bond unsaturation which may be present in any tertiary amine reactant useful in preparing the organo-borate compositions of this invention, catalysts may be employed, if desired. If such catalysts are employed, preferably such catalysts are tertiary hydrocarbon substituted amines, most preferably, trialkylamines. Representative examples of which include tributylamine, dimethyloctylamine, triethylamine and the like.

The organo-borate additive compositions of this invention can be prepared by adding the boron reactant, preferably boric acid, to at least one of the above defined tertiary amine reactants, in a suitable reaction vessel, and heating the resulting reaction mixture at a temperature ranging from about 50 ° to about 300 ° C with continuous stirring. The reaction is continued until by-product water ceases to evolve from the reaction mixture indicating completion of the reaction. The removal of by-product water is facilitated by either blowing an inert gas, such as nitrogen, over the surface of the reaction mixture or by conducting the reaction at reduced pressures. Preferably the reaction between the boron reactant and the tertiary amine will be carried out at temperatures ranging from about 100 ° C to about 250 ° C and most preferably between about 150 ° C and 230 ° C while blowing with nitrogen.

Although normally the amines will be liquid at room temperature, in those instances where the amine reactant is a solid or semi-solid it will be necessary to heat the amine to above its melting point in order to liquify it prior to the addition of the boron-containing reactant thereto. Those of ordinary skill in the art can readily determine the melting point of the amine either from the general literature or through a simple melting point analysis.

Generally, the amine reactant alone will serve as the solvent for the reaction mixture of the boron containing reactant and amine reactant. However, if desired, an inert normally liquid organic solvent can be used such as mineral oil, naphthabenzene, toluene or xylene can be used as the reaction media. Where the organo-borate additive compound is to be added directly to a lubricating oil, it is generally preferred to conduct the reaction merely using the amine reactant as the sole solvent.

As noted immediately above, the organo-borate additive compositions of this invention can be added directly to an oil of lubricating viscosity to form a lubricating composition of the present invention or, they can be diluted with a substantially inert, normally liquid organic diluent such as mineral oil, naphthabenzene, toluene or xylene to form an additive concentrate which is then added to the lubricating oil. These concentrates usually contain from about 10% to about 90% by weight of the organo-borate compositions of the invention and may contain, in addition, one or more additives known in the art such as those described hereinbelow.

As previously indicated, the multi-functional organo-borate compositions described herein are useful as additives for lubricants in which they function primarily as anti-wear, extreme pressure, friction modifying and/or axle efficiency improving materials. They can be employed in a wide variety of lubricants based on diverse oils of lubricating viscosity and mixtures thereof. These lubricants include crankcase lubricating oils for spark ignited and compression ignited internal combustion engines including automobile and truck engines, two-cycle engines. aviation piston engines, marine and railroad diesel engines, and the like. The additive compositions can also be used in gas turbines, stationary power engines and turbines and the like. Automatic transmission fluids, transaxle lubricants, gear lubricants, metal working lubricants, hydraulic fluids and other lubricating oil and grease compositions also benefit from the incorporation therein of the multi-functional compositions of this invention.

Natural oils include liquid petroleum oils and solvent treated or acid treated mineral lubricating oils of the paraffinic, naphthenic and mixed paraffinic-naphthenic types. Oils of lubricating viscosity derived from coal or shale are also useful base oils.

Synthetic lubricating oils include hydrocarbon oils and halo-substituted hydrocarbon oils such as polymerized and interpolymerized olefins (e.g. polybutylenes, polypropylenes, propylene-isobutylene copolymers, chlorinated polybutylenes, poly(1-hexenes), poly(1-octenes), poly(1-decenes)); alkyl benzenes (e.g., dodecylbenzenes, tetradecylbenzenes, dinonylbenzenes, di(2-ethylhexyl)benzenes); polyphenyls (e.g.. biphenyls, terphenyls. alkylated polyphenyls); alkylated diphenyl ethers, alkylated diphenyl sulfides and the derivatives, analogs and homologs thereof.

Alkylene oxide polymers and interpolymers and derivatives thereof where the terminal hydroxyl groups have been modified by esterification, etherification, etc., constitute another class of known synthetic lubricating oils. These are exemplified by polyoxyalkylene polymers prepared by polymerization of ethylene oxide or propylene oxide, the alkyl and aryl ethers of these polyoxyalkylene polymers (e.g., methylpolyisopropylene glycol ether having an average molecular weight of 1000, diphenyl ether of polyethylene glycol having a molecular weight of 500-1000, diethylether of polypropylene glycol having a molecular weight of 1000-1500); and mono- and polycarboxylic esters thereof, for example, the acetic acid esters. mixed $C_3$-$C_8$ fatty acid esters and the $C_{13}$ oxo acid diester of tetraethylene glycol.

Another suitable class of synthetic lubricating oils comprises the esters of dicarboxylic acids (e.g.. phthalic acid, succinic acid, alkyl succinic acids and alkenyl succinic acids, maleic acid, azelaic acid, suberic acid, sebacic acid,

fumaric acid, adipic acid, linoleic acid dimer, malonic acid, alkyl malonic acid, alkenyl malonic acids and the like) with a variety of alcohols (e.g., butyl alcohol, hexyl alcohol, dodecyl alcohol, 2-ethylhexyl alcohol, ethylene glycol, diethylene glycol monoether, propylene glycol). Specific examples of these esters include dibutyl adipate, di(2-ethylhexyl)sebacate, di-n-hexyl fumarate, dioctyl sebacate, diisooctyl azelate, diisodecyl azelate, dioctyl phthalate, didecyl phthalate, dieicosyl sebacate, the 2-ethylhexyl diester of linoleic acid dimer, and the complex ester formed by reacting one mole of sebacic acid with two moles of tetraethylene glycol and two moles of 2-ethylhexanoic acid.

Esters useful as synthetic oils also include those made from $C_5$ to $C_{12}$ monocarboxylic acids and polyols and polyol ethers such as neopentyl glycol, trimethylolpropane, pentaerythritol, dipentaerythritol and tripentaerythritol.

Silicone-based oils such as the polyalkyl-, polyaryl-, polyalkoxy-, polyaryloxysiloxane oils and silicate oils comprise another useful class of synthetic lubricants. These include tetraethyl silicate, tetraisopropyl silicate, tetra-(2-ethylhexyl)silicate, tetra-(4-methyl-2-ethylhexyl)silicate, tetra-(p-tert-butylphenyl)silicate, hexa-(4-methyl-2-pentoxy)disiloxane, poly(methyl)siloxanes, poly(methylphenyl)siloxanes, and the like. Other synthetic lubricating oils include liquid esters of phosphorus-containing acids (e.g., tricresyl phosphate, trioctyl phosphate, diethylester of decylphosphonic acid) and polymeric tetrahydrofurans and the like.

Unrefined, refined and re-refined oils can be used to form the lubricant compositions of the present invention. Unrefined oils are those obtained directly from a natural or synthetic source without further purification treatment. For example, a shale oil obtained directly from retorting operations, a petroleum oil obtained directly from distillation or ester oil obtained directly from an esterification process and used without further treatment would be an unrefined oil. Refined oils are similar to the unrefined oils except they have been further treated in one or more purification steps to improve one or more properties. Many such purification techniques such as distillation, solvent extraction, acid or base extraction, filtration and percolation are known to those skilled in the art. Re-refined oils are obtained by processes similar to those used to obtain re-refined oils applied to refined oils which have already been used in the service. Such re-refined oils are also known as reclaimed or reprocessed oils and often are additionally processed by techniques for removal of spent additives and oil breakdown products.

Generally, the lubricating compositions of the present invention contain an amount of the multi-functional organo borate compounds of this invention sufficient to provide said lubricating compositions with anti-wear, extreme pressure, friction modifying and axle efficiency performance properties. Normally, this amount will range from about 0.1 to about 10.0 percent by weight, and preferably from about 0.1 to about 5.0 percent by weight based on the total weight of the lubricating composition.

As used throughout this specification and appended claims, the term "minor amount" is intended to mean that when a lubricating composition contains a "minor amount" of a specific additive material, that amount is less than 50 percent by weight of the total composition. The term "major amount" as used throughout this specification and appended claims is intended to mean that when the lubricating composition contains a "major amount" of a lubricating oil, that amount is more than 50 percent by weight of the total lubricating composition.

The invention also contemplates the use of other additives in combination with the compositions of this invention. Such additives include, for example, detergents and dispersants of the ash producing or ashless type, corrosion and oxidation inhibiting agents, pour point depressing agents, viscosity index (VI) improvers, supplemental anti-wear and extreme pressure agents, color stabilizers and anti-foam agents.

The ash producing detergents are exemplified by oil-soluble neutral and basic salts of alkali or alkaline earth metals with sulfonic acids, carboxylic acids, and organic phosphorus acids characterized by at least one direct carbon-to-phosphorus linkage including those prepared by the treatment of an olefin polymer (e.g., polyisobutene having a molecular weight of 1000) with a phosphorizing agent such as phosphorus trichloride, phosphorus heptasulfide, phosphorus pentasulfide, phosphorus trichloride and sulfur, white phosphorus and a sulfur halide, or phosphorodithioic chloride. The most commonly used salts of such acids are those of sodium, potassium, lithium, calcium, magnesium, strontium and barium.

The term "basic salt" is used to designate metal salts wherein the metal is present in stoichiometrically larger amounts than the organic acid radical. The commonly employed methods for preparing the basic salts involve heating a mineral oil solution of an acid with a stoichiometric excess of a metal neutralizing agent such as the metal oxide, hydroxide, carbonate, bicarbonate, or sulfide at a temperature above 50° C and filtering the resulting mass. The use of a "promoter" in the neutralization step to aid in the incorporation of a large excess of metal likewise is known. Examples of compounds useful as the promoter include phenolic substances such as phenol, naphthol, alkylphenols, thiophenol, sulfurized alkylphenols, and condensation products of formaldehyde with phenolic substances; alcohols such as methanol, 2-propanol, octyl alcohol, Cellosolve, Carbitol, ethylene glycol, stearyl alcohol and cyclohexyl alcohol; and amines such as aniline, phenylenediamine, phenothiazine, phenyl-β-naphthylamine and dodecylamine. A particularly effective method for preparing the basic salts comprises mixing an acid with an excess of a basic alkaline earth metal neutralizing agent and at least one alcohol promoter and carbonating the mixture at an elevated temperature such as 60-200 ° C.

Ashless detergents and dispersants are so called despite the fact that depending upon their constitution, the

dispersants may, upon combustion, yield a non-volatile material such as boric oxide or phosphorus pentoxide; however, it does not ordinarily contain metal and, therefore, does not yield a metal-containing ash on combustion. Many types are known in the art and any of them are suitable for use in the lubricating compositions of this invention. The following are illustrative:

(1) Reaction products of carboxylic acids (or derivatives thereof) containing at least about 34 and preferably at least about 54 carbon atoms with nitrogen-containing compounds such as amine, organic hydroxy compounds such as phenols and alcohols, and/or basic inorganic materials. Examples of these "carboxylic dispersants" are described in many U.S. patents including 3,272,746; 3,381,022; and 4,234,435.

(2) Reaction products of relatively high molecular weight aliphatic or alicyclic halides with amines, preferably polyalkylene polyamines. These may be characterized as "amine dispersants" and examples thereof are described, for example, in U.S. patents 3,275,554; 3,438,757; 3,454,555; and 3.565,804.

(3) Reaction products of alkylphenols in which the alkyl group contains at least about 30 carbon atoms with aldehydes (especially formaldehyde) and amines (especially polyalkylene polyamines), which may be characterized as "Mannich dispersants". The materials described in U.S. patents 3,368,972; 3,413,347; and 3,980,569 are illustrative.

(4) Products obtained by post-treating the carboxylic acid, amine or Mannich dispersants with such reagents as urea, thiourea, carbon disulfide, aldehydes, keytones, carboxylic acids, hydrocarbon-substituted succinic anhydrides, nitriles, epoxides, boron compounds, phosphorus compounds, or the like.

(5) Interpolymers of oil-solubilizing monomers such as decylmethacrylate, vinyldecylether and high molecular weight olefins with monomers containing polar substituents, e.g., aminoalkylacrylates or acrylamides and poly (oxyethylene)-substituted acrylates. These may be characterized as "polymeric dispersants" and examples thereof are disclosed in U.S. patents 3,329,658: 3,449,250; 3,519,565; 3,666,730; 3,687,849; and 3,702,300.

All of the above noted patents are incorporated herein by reference for their disclosures of ashless dispersants suitable for use in combination with the multifunctional organo borate compounds of the present invention.

Supplementary anti-wear and extreme pressure agents and corrosion and oxidation inhibiting agents are exemplified by chlorinated aliphatic hydrocarbons such as chlorinated wax; organic sulfides and polysulfides such as benzyl disulfide, bis(chlorobenzyl)disulfide, dibutyltetrasulfide, sulfurized methyl oleate, sulfurized alkylphenols, sulfurized dipentene, and sulfurized terpenes; phosphosulfurized hydrocarbons such as the reaction product of a phosphorus sulfide with terpentine or methyl oleate; phosphorus esters including principally dihydrocarbon and trihydrocarbon phosphites such as dibutyl phosphite, diheptyl phosphite. dicyclohexyl phosphite, pentylphenyl phosphite, dipentylphenyl phosphite, tridecyl phosphite, distearyl phosphite, dimethylnaphthyl phosphite, oleyl-4-pentylphenyl phosphite, polypropylene (molecular weight of 500)-substituted phenyl phosphite and diisobutyl-substituted phenyl phosphite; metal thiocarbamates such as zinc dioctyldithiocarbamate and barium heptylphenyldithiocarbamate; group II metal phosphorodithioates such as zinc dicyclohexylphosphorodithioate, zinc dioctylphosphorodithioate, barium di(heptylphenyl)-phosphorodithioate, cadmiumdinonylphosphorodithioate and the zinc salt of a phosphorodithioic acid produced by the reaction of phosphorus pentasulfide with an equimolar mixture of isopropyl alcohol and n-hexyl alcohol.

The following examples illustrate the preparation of the multi-functional organo-borate additives and the lubricating compositions containing the same of the present invention. It should be understood that they are only illustrative and are not intended to limit the scope of the invention. Unless otherwise specified, all parts and percentages disclosed in these examples are by weight.

<u>Example 1</u>

A mixture of 702 parts (6 moles) of 2-diethylaminoethanol, 124 parts (2 moles) of boric acid and 500 parts of toluene is heated to boiling under nitrogen, with stirring, and water is removed by azeotropic distillation. When water removal is complete, the mixture is vacuum stripped and filtered. The filtrate is the desired boron-containing composition.

<u>Example 2</u>

A mixture of 2100 parts (6 moles) of "Ethomeen T/12" and 124 parts (2 moles) of boric acid is blown with nitrogen at 100-220° C, with stirring, as water is removed by distillation. The mixture is cooled to 140°C and filtered, using a filter aid material. The filtrate is the desired composition: containing 3.65% nitrogen and 1.04% boron.

Example 3

A mixture of 2100 parts (6 moles) of "Ethomeen T/12" and 124 parts (2 moles) of boric acid is heated to 100° C with stirring. The reaction vessel is then gradually evacuated as water is removed by distillation over 2-1/2 hours. The final temperature and pressure is 170° C and $2 \times 10^3$ Pa (15 torr) respectively. The mixture is filfered, using a filter aid material. The filtrate is the desired boron-containing product.

Example 4

A mixture of 1053 parts (3 moles) of ETHOMEEN 0/12 and 62 parts (1 mole) of boric acid is blown with nitrogen and heated to 180°C with stirring, as water is removed by distillation. The mixture is filtered through a filter aid material. The filtrate is the desired product containing 3.81% nitrogen and 0.98% boron.

Example 5

Following substantially the procedure of Example 2, a product is prepared from 2,138 parts (7.5 moles) of ETHOMEEN C/12 and 155 parts (2.5 moles) of boric acid. It contains 4.62% nitrogen and 1.35% boron.

Example 6

A product is prepared by the reaction of 1,269 parts (3 moles) of ETHOMEEN C/15 with 62 parts (1 mole) of boric acid, using the procedure of Example 2 but with a maximum reaction temperature of about 130°C. It contains 3.21% nitrogen and 0.68% boron.

Example 7

A product is prepared from 1,476 parts (3 moles) of ETHOMEEN S/15 and 62 parts (1 mole) of boric acid, using the procedure of Example 2 but with a maximum reaction temperature of 160°C. It contains 2.5% nitrogen and 0.73% boron.

Example 8

A product is prepared from 1,057.5 parts (1.5 moles) of ETHOMEEN S/20 and 31 parts (0.5 mole) of boric acid, using the procedure of Example 2, but with a maximum reaction temperature of 160°C. It contains 0.96% nitrogen and 0.50% boron.

Example 9

A product is prepared from 1,392 parts (1.5 moles) of ETHOMEEN S/25 and 31 parts (0.5 mole) of boric acid by the procedure of Example 2. It contains 1.55% nitrogen and 0.40% boron.

Example 10

A mixture of 2.430 parts (9 moles) of ETHODUOMEEN T/13, 186 parts (3 moles) of boric acid and 400 parts of xylene is heated under reflux, with nitrogen blowing, as water is removed by distillation. When water removal is complete, the mixture is vacuum stripped to remove volatiles; it is then diluted with mineral oil and filtered. The filtrate is an oil solution of the desired boron-containing composition.

Example 11

A mixture of 2100 parts (6 moles) of ETHOMEEN T/12 and 124 parts (2 moles) of boric acid, is blown with nitrogen at 100-230°C, with stirring, while the water formed is removed. After cooling, 550 parts (2 moles) of oleic acid is added and the mixture heated to 240°C with stirring and nitrogen blowing to remove water. The material is cooled and filtered to give a product containing 0.82% boron and 3.1% nitrogen.

Example 12

One thousand eight hundred and twenty-one (1821) parts (3 moles) of the monooleyl ester of ETHOMEEN

T/12 is reacted with 62 parts (1 mole) of boric acid at 230°C while nitrogen blowing. After removing the water of condensation and filtering through filter aid, the final product is obtained.

Example 13

A mixture of 2106 parts (3 moles) of ETHOMEEN T/12, 96 parts of sulfur (3 moles) and a small amount of tributylamine catalyst (0.03 mole) is heated to 180°C for several hours. The resulting sulfurized product is cooled and 62 parts (1 mole) of boric acid is added. After heating to 200°C and removing the water formed by nitrogen blowing, the product is filtered through filter aid to give a boron, nitrogen and sulfur-containing product.

The following examples, i.e. Examples 14-29, are representative of lubricating compositions of this invention containing a major amount of a lubricating oil and a minor amount of organo-borate additive compositions defined hereinabove.

Example 14

A lubricating oil composition is prepared by blending 5% of the product prepared in Example 2 with 95% of a solvent refined 100 neutral oil base.

Example 15

A lubricating oil composition is prepared by blending 90.5% by weight of an SAE80W base oil comprising a mixture of solvent refined 510 neutral oil and solvent refined 210 neutral oil present in a ratio of 2 to 1 by volume with the following additives:

| Additive | Amount, wt% |
|---|---|
| Polymeric VI improver | 1.0 |
| Sulfur phospnorus EP agent | 7.5 |
| Product from Example 2 | 1.0 |

Example 16

A mineral oil based lubricating composition is prepared employing the organo-borate compound from Example 2 by blending together the following materials:

| Material | Amount, wt% |
|---|---|
| Mineral Oil | 89.63 |
| Silicone Antifoamant | 0.025 |
| Dispersant type VI improver | 3.25 |
| Calcium overbased sulfonic acid containing calcium borate | 2.45 |
| Zinc dithiophosphate | 1.0 |
| Sulfurized sperm oil replacement | 1.0 |
| EP additive for cutting oils | 0.38 |
| ARMID O(1) | 0.35 |
| Synthetic seal swell additive | 0.25 |
| Diluent Oil | 0.67 |
| Product from Example 2 | 1.0 |

(1) Mixed fatty acid amide available from the Armak Company.

Examples 17-20

A series of lubricating oil compositions is prepared by blending together an SAE10W30 mineral oil. various other additives and various organo-borate compounds of this invention. All pertinent data are set forth below.

| Material | Example No.[1] | | | |
|---|---|---|---|---|
| | 17 | 18 | 19 | 20 |
| Mineral Oil (SAE 10W30) | 86.25 | 86.25 | 86.25 | 86.25 |
| Dispersant VI Improver | 5.12 | 5.12 | 5.12 | 5.12 |
| Dispersant | 4.19 | 4.19 | 4.19 | 4.19 |
| Mixed Zinc dithiophosphates | 1.61 | 1.61 | 1.61 | 1.61 |
| Calcium overbased sulfonic acid | 1.11 | 1.11 | 1.11 | 1.11 |
| Sodium overbased sulfonic acid | 0.50 | 0.50 | 0.50 | 0.50 |
| Solvent refined 100 neutral oil | 0.28 | 0.28 | 0.28 | 0.28 |
| Silicon antifoamant | 0.005 | 0.005 | 0.005 | 0.005 |
| Product of Example 2 | 1.0 | - | - | - |
| Product of Example 5 | - | 1.0 | - | - |
| Product of Example 11 | - | - | 1.0 | - |
| Product of Example 12 | - | - | - | 1.0 |

(1) All amounts are given in percent by weight based on the total weight of the composition.

Example 21

A mineral oil based tractor lubricating composition was prepared by blending together a mineral oil base oil, a silicone antifoamant, dispersant type VI improver, a multipurpose additive for tractor hydraulic/transmission wet brake fluids and the product from Example 2 All pertinent data are set forth below:

| Material | Amount |
|---|---|
| Mineral Oil | 88.50 |
| Silicone Antifoamant | 0.025 |
| Dispersant type VI improver | 3.25 |
| Multipurpose additive for hydraulic/transmission/wet brake fluid for tractors | 7.2 |
| Product from Example 2 | 1.0 |

Examples 22-29

A series of lubricating compositions is prepared by blending together a base oil, oil additives and an organoborate compound of this invention. All pertinent data relating to these lubricating compositions is set forth immediately below. Such compositions exhibit improved axle efficiency characteristics.

| | Example No.[1] | | | | | | | |
|---|---|---|---|---|---|---|---|---|
| | 22 | 23 | 24 | 25 | 26 | 27 | 28 | 30 |
| Mineral Oil (Gear Lubricant Base SAE 80W) | 91.5 | 91.04 | 90.13 | 89.2 | 91.5 | 91.04 | 90.13 | 89.2 |
| Multipurpose Sulfur-Phosphorus Extreme Pressure Additive | 7.5 | 7.46 | 7.39 | 7.31 | 7.5 | 7.46 | 7.39 | 7.31 |
| Polymethacrylate VI Improver | 1.0 | 0.995 | 0.985 | 0.98 | 1.0 | 0.995 | 0.985 | 0.98 |
| Product of Example 2 | - | 0.50 | 1.50 | 2.50 | - | 0.50 | 1.50 | 2.50 |

(1) All values are given in percent by weight based on the total weight of the composition.

Example 30

A rapid means for evaluating the anti-wear extreme pressure characteristics of lubricating fluids intended for use as industrial cutting oils is to subject such oils to a tapping test. This test consists of tapping 60 accurately drilled pilot holes in a 9.5 mm (3/8 inch) thick SAE 1020 hot rolled steel bar using five separate 1/4-20NC test taps. Thirty of these holes are tapped using a reference fluid (six holes per tap) and the remaining thirty holes are tapped using the lubricant to be tested. The torque developed during the tapping of each of the sixty holes is measured and from these measurements, the tapping efficiency (average reference fluid torque reading divided by the average test fluid torque reading $\times$ 100) for the test fluid is calculated. When the lubricating oil composition of Example 14 is tested in the above manner and compared against a reference fluid (the base oil plus additives of the composition of Example 14 less the organo-borate compound of Example 2) a 2 percent improvement in tapping efficiency is obtained.

Example 31

In order to demonstrate the anti-chatter characteristics of the lubricating compositions of the present invention in limited slip differentials, the following test is conducted.

To the rear axle of a motor vehicle equipped with a limited slip differential is added a reference lubricating composition comprising the base oil plus supplemental additives of the composition of Example 15 less the organoborate additive of Example 2. In order to provide for differential action while the car is operated on a road simulator at a speed of 88 km.hr$^{-1}$ (55 MPH), one end of the rear axle is fitted with a wheel/tire combination which is larger or smaller than the wheel tire combination fitted to the other end of the axle. These wheel/tire combinations are exchanged from side to side every 322 km (200 miles). At the beginning of the test, a specified quantity of a salt water mixture is also added to the rear axle and at 644 km (400 mile) intervals thereafter. At 2576 km (1600 miles) and at each 1288 km (800 mile) interval thereafter, the vehicle is removed from the simulator, fitted with its original equipment wheel,tire combinations and road tested for chatter. The same procedure is used employing the lubricating composition of Example 15 after equipping the vehicle with a totally new rear axle assembly. The lubricating oil composition of Example 15 provides a 167% increase in distance travelled prior to the development of chatter compared to the reference lubricating composition, (e.g. 10300 km vs 3864 km; 6400 miles vs 2400 miles).

Example 32

The lubricating composition of Example 16 is subjected to a high torque axle test to determine the anti-wear and load carrying characteristics of this lubricant. In this test, the test lubricant is added to a hypoid rear axle on a 3/4 tonne (ton) army truck driven by a six cylinder, 3854 cm$^3$ (235 cubic inch) Chevrolet truck engine through a 4-speed transmission. The test is run for 10.5 hours at constant low speed and high load conditions in a laboratory dynamometer. Evaluation is made on the basis of a visual inspection of the hypoid unit with respect to discoloration, deposits and physical condition of the contract surfaces of the gear teeth of the ring and pinion gears. The effectiveness of the test lubricant is rated as either pass or fail. Example 16 passes this test whereas a reference lubricant identical to Example 16 but minus the organo-borate compound fails.

Example 33

The lubricants from Examples 17 to 20 are tested for their friction modifying characteristics employing a motored engine frictional horsepower test. In this test, either a 3.8 litre, 6-cylinder Buick engine or a 2.3 litre, 4-cylinder Ford Pinto engine is motored by a motoring-absorbing dynamometer. The engine coolant and oil temperatures are maintained at controlled levels (approximately 85°C and 104°C respectively). The test procedure involves first flushing the engine with the test lubricant, draining the engine and adding a new charge of this sample. The engines are then motored at 1400 and 1200 rpm respectively until coolant and lubricant temperatures reach desired levels (see above). The engine speeds are then reduced to 600 and 400 rpm respectively and the torque measured. Subsequent torque readings are taken at 400 rpm intervals up to 2600 and 2800 rpm respectively. The engine friction horsepower is calculated from the engine rpm and recorded torque values at each speed in accordance with the following equation:

$$FHP = \frac{NxT}{5252}$$

FHP = engine frictional horsepower
T = engine frictional torque in ft/lbs
N = engine speed in RPM

5252 = constant

The ability or inability of a test lubricant to reduce engine frictional horsepower as compared to a reference lubricant is a measure of the test lubricant's friction modifying properties. Pertinent data relating to the improved friction modifying properties of the lubricants of Examples 17 to 20 are given in TABLE I below. The reference lubricants against which each of the Examples are compared are identical in every respect to the specific Example being tested but lacking the particular organo-borate compound therein.

TABLE I

| Example No. | FHP(1) | % Improvement |
|---|---|---|
| 17 | 6.82 | 3.3 |
| Ref. Lubricant(2) | 7.05 | - |
| 18 | 6.86 | 2.6 |
| Ref. Lubricant(3) | 7.05 | - |
| 19 | 4.69 | 7.7 |
| Ref. Lubricant(4) | 5.05 | - |
| 20 | 7.07 | 3.1 |
| Ref. Lubricant(5) | 7.30 | - |

(1)Frictional Horse power (calculated as indicated above)
(2)Lubricant of Example 17 less the organo-borate compound of Example 2.
(3)Lubricant of Example 18 less the organo-borate compound of Example 5.
(4)Lubricant of Example 19 less the organo-borate compound of Example 11.
(5)Lubricant of Example 20 less the organo-borate compound of Example 12.

Testing of Examples 17 and 20 was carried out in the Buick engine whereas testing of Examples 18 and 19 was carried out in the Pinto engine.

Example 35

The mineral oil based tractor lubricating composition of Example 21 is evaluated in a tractor brake chatter test to determine its frictional characteristics in providing smooth operation of the "wet" brakes. The test consists of conducting a series of brake applications at various axle speeds (5-20 rpm) and brake application pressures (3.5-13.8 MPa; 500-2000 psi). An oscillographic record is made of the brake torque required during each brake application to achieve a specific retarding force. When Example 21 is tested in this manner, it provides a 58 percent reduction in torque requirements (i.e. 9311 N.m with no chatter as compared to a reference fluid (the composition of Example 21 less the organo-borate compound of Example 2) requiring 22,000 N.m of torque at which time brake chatter occurs.

## Claims

**1.** A boron containing composition comprising an organo-borate compound of the general formula

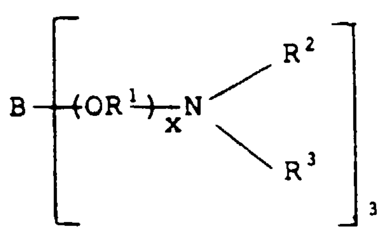

(I)

wherein

$R^1$ is a lower alkylene-based radical,

$R^2$ is a hydrocarbon-based radical or a radical of the formula $(R^4O)_yH$,
$R^3$ is a hydrocarbon-based radical,
$R^4$ is a lower alkylene-based radical, and
x and y are each an integer which is at least 1, and the sum of x + y is at most about 75.

**2.** A composition according to claim 1 wherein $R^3$ of formula (I) is selected from alkyl-based and alkenyl-based radicals.

**3.** A composition according to either of claims 1 and 2 wherein the radical $R^1$ in formula (I) is a lower alkylene-based radical containing from 1 to about 8 carbon atoms.

**4.** A composition according to claim 3 wherein the radical $R^2$ in formula (I) has the structure $(R^4 O)_yH$.

**5.** A composition according to claim 4 wherein $R^4$ is a lower alkylene-based radical containing from 1 to about 8 carbon atoms.

**6.** A method for preparing an organo-borate composition according to claim 1 which comprises reacting, at a temperature ranging from about 50 ° C to about 300 ° C.

A. at least one boron containing compound selected from boric acid, boron trioxide and boric acid esters of the formula $B(OR)_3$ wherein R is a hydrocarbon based radical containing from 1 to about 8 carbon atoms with,
B. at least three moles, per mole of reagent A, of at least one tertiary amine corresponding to the formula

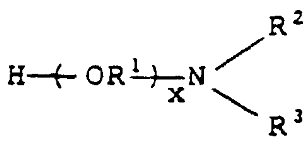

(III)

wherein

$R^1$ is a lower alkylene-based radical,
$R^2$ is a hydrocarbon-based radical or a radical of the formula $(R^4 O)_yH$,
$R^3$ is a hydrocarbon based radical,
$R^4$ is a lower alkylene-based radical, and
x and y are each an integer which is at least 1, and the sum of x and y is at most about 75.

**7.** A method according to claim 6 wherein $R^3$ of formula (III) is selected from alkyl-based and alkenyl-based radicals.

**8.** A method according to either of claims 6 and 7 wherein the radical $R^1$ of formula (III) is a lower alkylene-based radical containing from 1 to about 8 carbon atoms.

**9.** A method according to claim 8 wherein the radical $R^2$ in formula (III) has the structure $(R^4O)_yH$.

**10.** A method according to claim 9 wherein $R^4$ is a lower alkylene radical containing from 1 to about 8 carbon atoms.

**11.** A method according to any of claims 6 to 10 wherein reagent A is orthoboric acid.

**12.** An additive concentrate comprising a substantially inert, normally liquid organic diluent and about 10-90% by weight of a composition according to any of claims 1 to 5.

**13.** A lubricating composition comprising a major amount of lubricating oil and a minor amount of a composition according to any of claims 1 to 5.

**Patentansprüche**

1. Borhaltige Zusammensetzung, umfassend eine Organoboratverbindung der allgemeinen Formel

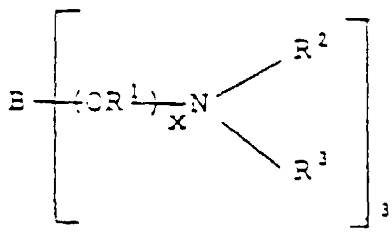

(I)

in der

$R^1$ einen Rest auf Niederalkylenbasis bedeutet,
$R^2$ einen Rest auf Kohlenwasserstoffbasis oder einen Rest der Formel $(R^4O)_yH$ bedeutet,
$R^3$ einen Rest auf Kohlenwasserstoffbasis bedeutet,
$R^4$ einen Rest auf Niederalkylenbasis bedeutet und
x und y jeweils eine ganze Zahl bedeuten, die mindestens 1 ist und wobei die Summe von x + y höchstens etwa 75 beträgt.

2. Zusammensetzung nach Anspruch 1, wobei $R^3$ in Formel (I) ausgewählt ist aus Resten auf Alkylbasis und Alkylenbasis.

3. Zusammensetzung nach den Ansprüchen 1 und 2, wobei der Rest $R^1$ in Formel (I) einen Rest auf Niederalkylenbasis mit 1 bis etwa 8 Kohlenstoffatomen bedeutet.

4. Zusammensetzung nach Anspruch 3, wobei der Rest $R^2$ in Formel (I) die Struktur $(R^4O)_yH$ besitzt.

5. Zusammensetzung nach Anspruch 4, wobei $R^4$ einen Rest auf Niederalkylenbasis mit 1 bis etwa 8 Kohlenstoffatomen bedeutet.

6. Verfahren zur Herstellung einer Organoboratzusammensetzung, gemäß Anspruch 1, umfassend die Umsetzung bei einer Temperatur im Bereich von etwa 50 bis etwa 300°C von

A. mindestens einer borhaltigen Verbindung ausgewählt aus Borsäure, Bortrioxid und Borsäureestern der Formel $B(OR)_3$, in der R einen Rest auf Kohlenwasserstoffbasis mit 1 bis etwa 8 Kohlenstoffatomen bedeutet, mit
B. mindestens drei Mol, je Mol Reagenz A von mindestens einem tertiären Amin der Formel

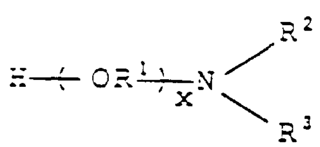

(III)

in der

$R^1$ einen Rest auf Niederalkylenbasis bedeutet,
$R^2$ einen Rest auf Kohlenwasserstoffbasis oder einen Rest der Formel $(R^4O)_yH$ bedeutet,
$R^3$ einen Rest auf Kohlenwasserstoffbasis bedeutet,
$R^4$ einen Rest auf Niederalkylenbasis bedeutet, und
x und y jeweils eine ganze Zahl bedeuten, die mindestens 1 ist, und die Summe von x und y höchstens etwa 75 beträgt.

**7.** Verfahren nach Anspruch 6, wobei $R^3$ in Formel (III) ausgewählt ist aus Resten auf Alkylbasis und Alkylenbasis.

**8.** Verfahren nach einem der Ansprüche 6 und 7, wobei der Rest $R^1$ in Formel (III) einen Rest auf Niederalkylenbasis mit 1 bis etwa 8 Kohlenstoffatomen bedeutet.

**9.** Verfahren nach Anspruch 8, wobei der Rest $R^2$ in Formel (III) die Struktur $(R^4O)_yH$ besitzt.

**10.** Verfahren nach Anspruch 9, wobei $R^4$ einen Niederalkylenrest mit 1 bis etwa 8 Kohlenstoffatomen bedeutet.

**11.** Verfahren nach einem der Ansprüche 6 bis 10, wobei das Reagenz Orthoborsäure ist.

**12.** Additivkonzentrat, umfassend ein im wesentlichen inertes, normalerweise flüssiges, organisches Verdünnungsmittel und etwa 10 bis 90 Gew.-% einer Zusammensetzung nach einem der Ansprüche 1 bis 5.

**13.** Schmiermittel, umfassend eine Hauptmenge eines Schmieröles und eine geringere Menge einer Zusammensetzung nach einem der Ansprüche 1 bis 5.

**Revendications**

**1.** Composition contenant du bore comprenant un composé organo-boré de formule générale :

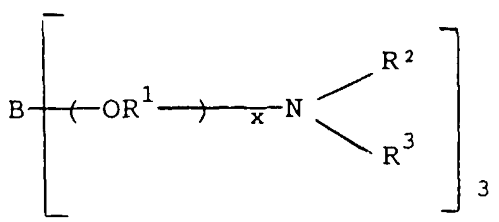

(I)

dans laquelle

$R^1$ est un radical à base d'alkylène inférieur,
$R^2$ est un radical à base d'hydrocarbure ou un radical de formule $(R^4O)_yH$,
$R^3$ est un radical à base d'hydrocarbure,
$R^4$ est un radical à base d'alkylène inférieur et
x et y sont chacun un nombre entier qui est au moins 1 et la somme de x + y est au plus 75 environ.

**2.** Composition selon la revendication 1, dans laquelle $R^3$ de la formule (I) est choisi parmi les radicaux à base d'alkyle et à base d'alkényle.

**3.** Composition selon la revendication 1 ou 2, dans laquelle le radical $R^1$ dans la formule (I) est un radical à base d'alkylène inférieur contenant 1 à environ 8 atomes de carbone.

**4.** Composition selon la revendication 3, dans laquelle le radical $R^2$ dans la formule (I) a la structure $(R^4O)_yH$.

**5.** Composition selon la revendication 4, dans laquelle $R^4$ est un radical à base d'alkylène inférieur contenant de 1 à environ 8 atomes de carbone.

**6.** Procédé de préparation d'une composition d'organo-borate selon la revendication 1, qui comprend la réaction, à une température dans la gamme d'environ 50 à 300°C, de

A. au moins un composé contenant du bore choisi parmi l'acide borique, le trioxyde de bore et les esters d'acide borique de formule $B(OR)_3$, R étant un radical à base d'hydrocarbure contenant 1 à environ 8 atomes de carbone avec,
B. au moins trois moles, par mole de réactif A, d'au moins une amine tertiaire correspondant à la formule :

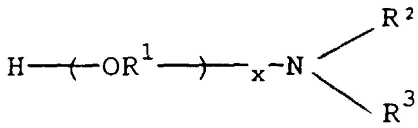

(III)

dans laquelle

$R^1$ est un radical à base d'alkylène inférieur,
$R^2$ est un radical à base d'hydrocarbure ou un radical de formule $(R^4O)_yH$,
$R^3$ est un radical à base d'hydrocarbure,
$R^4$ est un radical à base d'alkylène inférieur et
x et y sont chacun un nombre entier qui est au moins 1 et la somme de x + y est au plus 75 environ.

**7.** Procédé selon la revendication 6, dans lequel $R^3$ de la formule (III) est choisi parmi les radicaux à base d'alkyle et à base d'alkényle.

**8.** Procédé selon la revendication 6 ou 7, dans lequel le radical $R^1$ dans la formule (III) est un radical à base d'alkylène inférieur contenant de 1 à environ 8 atomes de carbone.

**9.** Procédé selon la revendication 8, dans lequel le radical $R^2$ dans la formule (III) a la structure - $(R^4O)_yH$.

**10.** Procédé selon la revendication 9, dans lequel $R^4$ est un radical à base d'alkylène inférieur contenant 1 à environ 8 atomes de carbone.

**11.** Procédé selon l'une quelconque des revendications 6 à 10, dans lequel le réactif A est l'acide orthoborique.

**12.** Concentré d'additif comprenant un diluant organique normalement liquide sensiblement inerte et environ 10 à 90% en poids d'une composition selon l'une quelconque des revendications 1 à 5.

**13.** Composition lubrifiante comprenant une quantité principale d'huile lubrifiante et une quantité secondaire d'une composition selon l'une quelconque des revendications 1 à 5.